# EUROPÄISCHE PATENTSCHRIFT

(11) **EP 3 055 196 B1**
(45) Veröffentlichungstag und Bekanntmachung des Hinweises auf die Patenterteilung: **14.03.2018**
(21) Anmeldenummer: 14755067.7
(22) Anmeldetag: 21.08.2014
(51) Int. Cl.: B62J 9/00, A45C 7/00

(54) **GEPÄCKKOFFER**
LUGGAGE CASE
VALISE À BAGAGES

(30) Priorität: 09.10.2013 DE 102013220335
(43) Veröffentlichungstag der Anmeldung: 17.08.2016
(73) Patentinhaber: Bayerische Motoren Werke Aktiengesellschaft, 80809 München (DE)
(72) Erfinder: REINHART, Peter, 82380 Peissenberg (DE)
(86) Internationale Anmeldenummer: PCT/EP2014/067801
(87) Internationale Veröffentlichungsnummer: WO 2015/051941

(56) Entgegenhaltungen:
- EP-A1- 2 639 106
- EP-A2- 2 433 854
- DE-U1-202010 007 028

## Beschreibung

Die Erfindung betrifft einen Gepäckkoffer, insbesondere für ein motorisiertes Zweirad.

Derartige Gepäckkoffer, die an einem Gepäckträger des Zweirads aufrecht stehend oder hängend befestigt werden, haben einen Körper, in dem das eigentliche Gepäckfach ausgebildet ist und an dem ein Deckel angelenkt ist, mit dem sich das Gepäckfach verschließen lässt. Ein derartiger Gepäckkoffer ist beispielsweise in der EP 2 639 106 A1 gezeigt.

Normalerweise kann der Deckel des Gepäckkoffers unter seiner eigenen Gewichtskraft hart zufallen, was ein Risiko für Beschädigungen des Schließmechanismus birgt.

Es ist bekannt, das Öffnen des Deckels durch Gasdruckfedern zwischen Körper und Deckel des Gepäckkoffers zu unterstützen, die den Deckel automatisch anheben. Der Deckel kann hier zwar nicht mehr mit Schwung zufallen, jedoch muss zum Schließen des Deckels immer eine Kraft durch den Benutzer aufgewendet werden, um die Druckkraft der Gasdruckfedern zu überwinden. Außerdem sind Gasdruckfedern relativ teuer.

Die DE 20 2010 007 028 U1 schlägt einen Abfalleimer vor, bei der der Deckel beim Zufallen auf dem letzten Stück durch ein linear verschiebliches Dämpfungselement abgebremst wird, das abseits der Scharniere des Deckels im Bereich einer Tretmechanik angeordnet ist.

Um die Haptik beim Schließen des Gepäckkofferdeckels zu verbessern, sowie um Beschädigungen der Schließmechanik des Gepäckkoffers zu vermeiden, wäre es wünschenswert, auf einfache Weise zu verhindern, dass der Deckel des Gepäckkoffers hart mit Schwung zufallen kann, wobei dennoch ein komfortables Schließen des Deckels möglich ist.

Diese Aufgabe wird bei einem Gepäckkoffer, insbesondere für ein motorisiertes Zweirad, gelöst, der einen Deckel aufweist, der über wenigstens ein Scharnier beweglich relativ zu einem Körper des Gepäckkoffers angeordnet ist, indem im Bereich des Scharniers ein Dämpfungselement vorgesehen ist, das beim Schließen des Deckels in Anlage an ein mit dem Deckel bewegtes Bauteil kommt und so die Schließbewegung dämpft. Durch die Verwendung eines Dämpfungselements, das ab einem bestimmten Schließweg auf den Deckel einwirkt und diesen insbesondere vor dem Kontakt der Komponenten des Schließmechanismus abbremst, lässt sich auf einfache und kostengünstige Weise ein hartes Zufallen des Deckels des Gepäckkoffers vermeiden. Eine Anordnung des Dämpfungselements im Bereich des Scharniers, also in der Nähe des über das Scharnier am Körper angelenkten Randes des Deckels, sorgt dafür, dass das Dämpfungselement bei Zugriff auf das Gepäckfach des Gepäckkoffers nicht stört.

Das Dämpfungselement könnte an einem beliebigen, zusammen mit dem Deckel bewegten Bauteil angreifen, um die Schließbewegung des Deckels zu dämpfen. Bevorzugt ist das Bauteil jedoch Bestandteil des Scharniers selbst, da auf diese Weise keine weiteren Komponenten verbaut werden müssen.

Über die Wahl des Dämpfungsgrades des Dämpfungselements lässt sich die Dämpfung einfach individuell auf verschiedene Gepäckkoffer abstimmen, ohne dass die Anordnung von Scharnier, Bauteil und Dämpfungselement wesentlich verändert werden muss.

Vorzugsweise wird ein Dämpfungselement eingesetzt, das einen linearen Verschiebeweg durchläuft, bei dem also die kinetische Energie des sich schließenden Deckels durch eine gebremste Verschiebung des Dämpfungselements abgebaut wird. Das Dämpfungselement verformt sich dabei vorzugsweise nur unwesentlich. Die kinetische Energie wird vielmehr durch bei der Verschiebung erzeugte Reibung umgesetzt. Derartige Dämpfungselemente sind bekannt und als vorgefertigte Baueinheit erhältlich. Sie sind leise und haben eine hohe Lebensdauer bei vielen Schließzyklen.

Das Dämpfungselement ist vorteilhaft in eine ausgefahrene Position vorgespannt, sodass beim Öffnen des Deckels das Dämpfungselement automatisch in seine Ausgangsposition zum Dämpfen des Deckels beim Schließen verfahren wird.

Das Scharnier ist beispielsweise ein Bügelscharnier, das zum Schließen eine Schwenkbewegung ausführt. Derartige Scharniere werden bei Gepäckkoffern oft eingesetzt, um einen größeren maximalen Öffnungswinkel des Deckels zu ermöglichen.

Insbesondere bei der Verwendung eines Bügelscharniers ist es günstig, wenn das Scharnier in einem letzten Abschnitt der Schließbewegung entlang des Dämpfungselements gleitet. Gleichzeitig wird in diesem Fall das Dämpfungselement durch das Scharnier in seine eingeschobene Position gedrückt, wobei die kinetische Energie des Deckels abgebaut wird.

Das Bremsmoment des Dämpfungselements ist vorzugsweise geringer ausgelegt als ein aus der Gewichtskraft des Deckels resultierendes Drehmoment, sodass der Deckel ohne äußere Krafteinwirkung schließen kann. Das Bremsmoment ist natürlich so hoch zu wählen, dass ein hartes ins Schloss fallen des Deckels ausgeschlossen ist.

Es ist möglich, nur ein einziges Scharnier und ein einziges Dämpfungselement vorzusehen, was insbesondere dem Design schmaler Gepäckkoffer entgegenkommt.

Es ist nicht notwendig, die gesamte Schließbewegung zu dämpfen. Es hat sich als ausreichend erwiesen, wenn ab einem bestimmten Schließweg des Deckels das Bauteil in Kontakt mit dem Dämpfungselement kommt und so die restliche Schließbewegung mit reduzierter Geschwindigkeit erfolgt.

Der Kontakt zwischen Bauteil und Dämpfungselement kann beispielsweise bei einem Schließwinkel von etwa 5 bis 45 Grad erfolgen.

Bei dem Gepäckkoffer kann es sich um ein Topcase handeln. Die Erfindung ist aber auch für andere Gepäckkoffer für motorisierte Zweiräder umsetzbar.

Die Erfindung wird nachfolgend anhand eines Ausführungsbeispiels mit Bezug auf die beigefügten Zeichnungen näher beschrieben. In den Zeichnungen zeigen:
- Figur 1 eine schematische perspektivische teilgeschnittene Ansicht eines erfindungsgemäßen Gepäckkoffers;
- Figur 2 eine schematische perspektivische Ansicht des Scharniers und des Dämpfungselements des Gepäckkoffers aus Figur 1;
- Figur 3 eine schematische Schnittansicht des Gepäckkoffers aus Figur 1 bei geschlossenem Deckel; und
- Figur 4 eine schematische Schnittansicht des Gepäckkoffers aus Figur 1 während des Schließens des Deckels.

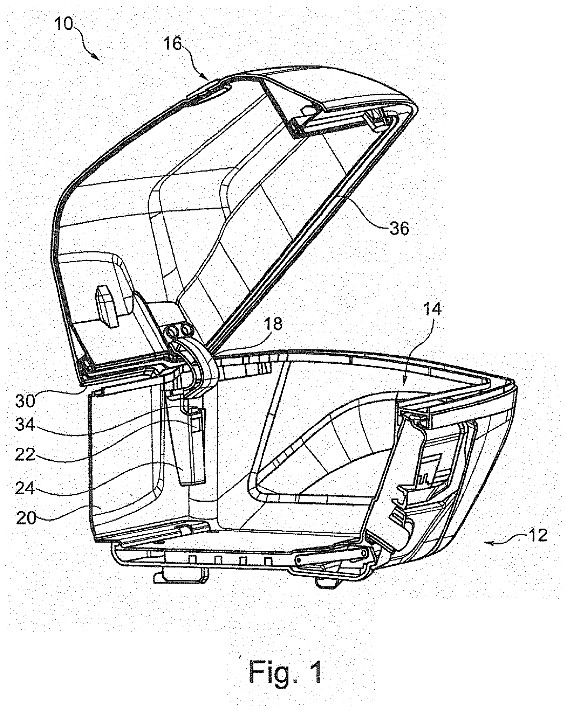

Figur 1 zeigt einen Gepäckkoffer 10, hier ein Topcase für eine aufrecht stehende Montage auf einem Gepäckträger eines motorisierten Zweirads.

Der Gepäckkoffer 10 hat einen Körper 12, in dem das eigentliche Gepäckfach 14 ausgebildet ist, sowie einen Deckel 16, der über ein Scharnier 18 an einer Seitenwand 20 des Deckels 16 mit dem Körper 12 verbunden ist, sodass der Deckel 16 zum Öffnen und Schließen verschwenkt werden kann.

In Figur 1 ist der Deckel 16 in etwa um den maximalen Öffnungswinkel αₘₐₓ gegenüber dem Körper 12 geöffnet dargestellt.

An der in Figur 1 linken Seitenwand 20 des Körpers 12 ist unterhalb des Scharniers 18 ein Dämpfungselement 22 angeordnet. Das Dämpfungselement 22 ist linear verschiebbar in einem Gehäuse 24 geführt, das fest mit der Seitenwand 20 verbunden ist. Die Verschiebebewegung ist hier in etwa vertikal ausgereichtet, die exakte Geometrie bleibt jedoch der Wahl des Fachmanns in Abhängigkeit von den jeweiligen geometrischen Gegebenheiten des Gepäckkoffers überlassen.

Die restlichen in den Figuren gezeigten Komponenten sind von herkömmlichen Gepäckkoffern bekannt und werden hier nicht näher beschrieben.

In diesem Fall ist nur ein einziges Scharnier 18 zusammen mit einem einzigen Dämpfungselement 22 vorgesehen. Bei größeren Gepäckkoffern 10 könnten jedoch auch mehrere Scharniere 18 sowie gegebenenfalls mehrere Dämpfungselemente 22 verwendet werden.

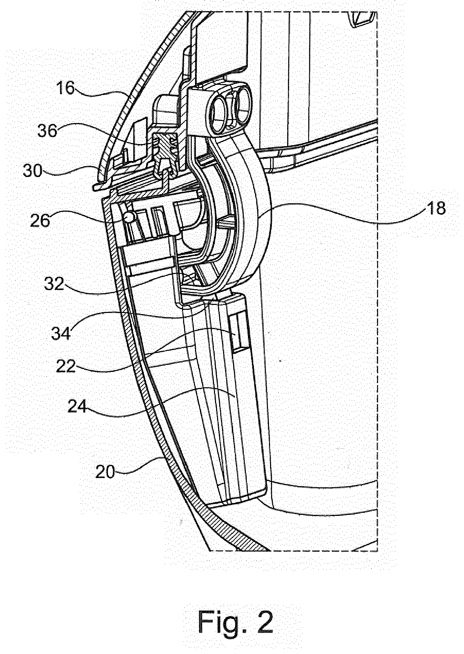

Das Scharnier 18 ist in den Figuren 2 bis 4 näher dargestellt und ist im vorliegenden Beispiel als in etwa U-förmiges Bügelscharnier ausgebildet, bei dem ein Ende des Bügels in einen Schwenkpunkt 26 mit dem Körper 12 des Gepäckkoffers 10 nahe dem oberen Rand der Seitenwand 20 verbunden ist. Das andere Ende 28 des Bügels des Scharniers 18 ist nahe dem Rand 30 des Deckels 16 fest und starr mit diesem verbunden.

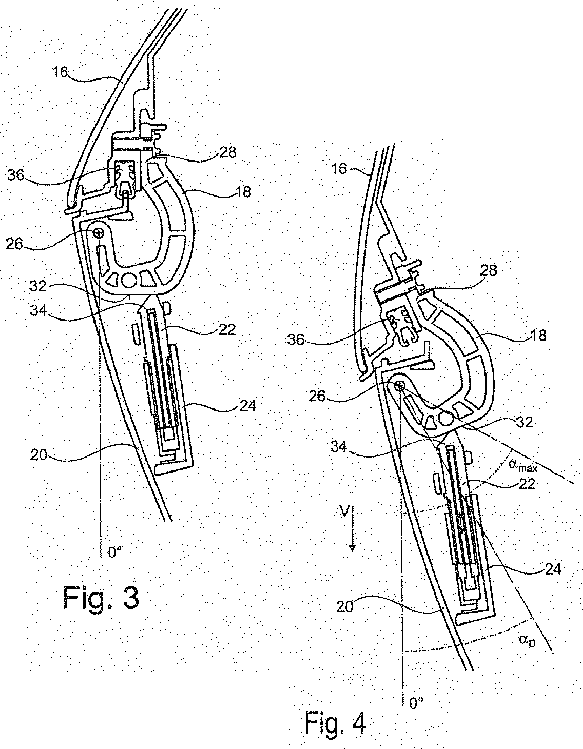

In der in den Figuren 2 und 3 dargestellten geschlossen Stellung des Deckels 16 liegt das Scharnier 18 mit einem mittleren, hier im Wesentlichen geradlinigen Abschnitt am Dämpfungselement 22 an, sodass dieses in seine eingeschobene Position im Gehäuse 24 geschoben ist. Dieser mittlere Abschnitt des Scharniers 18 bildet hier ein Bauteil 32, das in Kontakt mit dem Dämpfungselement 22 kommt, um die Schließbewegung des Deckels 16 zu dämpfen. Das Bauteil 32 könnte auch durch eine andere zusammen mit dem Deckel 16 bewegte Komponente z.B. des Scharniers 18 oder des Deckels 16 gebildet sein, wobei dann gegebenenfalls das Dämpfungselement 22 an anderer Stelle zu platzieren ist.

Wird der Deckel 16 geöffnet, so wird das Scharnier 18 um den Schwenkpunkt 26 verschwenkt, wobei der mittlere Abschnitt des Scharniers 18 an der Spitze 34 des Dämpfungselements 22 entlang gleitet und sich entgegen der Vertikalrichtung V nach ober bewegt (siehe Figur 4).

Das Dämpfungselement 22 ist in seine in Figur 4 gezeigte ausgefahrene Position vorgespannt (nicht näher dargestellt), sodass es bestrebt ist, diese automatisch einzunehmen. Beim Öffnen des Deckels 16 fährt daher automatisch das Dämpfungselement 22 aus der eingeschobenen Position entgegen der Vertikalrichtung V (siehe Fig. 4) in seine ausgefahrene Position.

Als Dämpfungselement 22 kann ein beliebiges bekanntes linear verschiebbares, wiederholt verwendbares Dämpfungsbauteil zum Einsatz kommen. Das Dämpfungselement 22 ist jedoch ein von einer eventuell am Rand 30 des Deckels 16 oder des Gepäckfachs 14 vorgesehenen elastischen Dichtung 36 verschieden und hier auch räumlich davon getrennt angeordnet.

Bei Überschreiten eines vorbestimmten Öffnungswinkels α_{D} löst sich das Scharnier 18 vom Dämpfungselement 22. Wie in Figur 1 zu erkennen ist, besteht beim maximalen Öffnungswinkel αₘₐₓ ein Abstand zwischen dem Scharnier 18 und dem Dämpfungselement 22.

Bei der Schließbewegung des Deckels 16 erfolgt der Kontakt zwischen dem Bauteil 32 und dem Dämpfungselement 22 so, dass das Scharnier 18 mit seinem mittleren Abschnitt bei einem vorbestimmten Öffnungswinkel α_{D} auf die Spitze 34 des Dämpfungselements 22 trifft. Ab diesem Zeitpunkt wirkt ein Bremsmoment auf den Deckel 16, das dessen Schließbewegung abbremst, wobei die Bewegungsenergie des Deckels 16 durch die Verschiebung des Dämpfungselements 22 abgebaut wird.

Da das Scharnier 18 an seinem einem Ende am Schwenkpunkt 26 angelenkt ist, gleitet der mittlere Abschnitt des Scharniers 18 während der weiteren Schließbewegung des Deckels 16 entlang der Spitze 34 des Dämpfungselements 22. Dabei verschiebt sich jedoch, ebenfalls aufgrund der Schwenkbewegung des Scharniers 18, der Berührpunkt zwischen Scharnier 18 und Dämpfungselement 22 in Vertikalrichtung V immer weiter nach unten, sodass das Dämpfungselement 22 in Richtung V in das Gehäuse 24 in Richtung seiner eingeschobenen Position linear verschoben wird. Diese Verschiebebewegung erfolgt unter Erzeugung einer Reibungskraft, was die kinetische Energie des Deckels 16 abbaut.

Die Dämpfungswirkung lässt sich unter anderem über das Bremsmoment des Dämpfungselements 22, aber auch über die Form des mittleren Abschnitts des Scharniers 18 einstellen.

Im hier gezeigten Beispiel liegt der Winkel α_{D}, bei dem die Dämpfung beginnt, in etwa bei der Hälfte des maximalen Öffnungswinkels αₘₐₓ. Die 0°-Linie in den Figuren 3 und 4 bezeichnet den Ausgangwinkel in der geschlossenen Stellung, von wo aus die Schwenkbewegung des Scharniers 18 betrachtet wird. Der Winkel αₘₐₓ beträgt hier ungefähr 60°, sodass der Winkel α_{D} in diesem Beispiel bei etwa 30° liegt. Daher ist in diesem Beispiel etwa die Hälfte des Schließweges gedämpft. Der Kontaktwinkel und somit der gedämpfte Schließweg sind jedoch natürlich über die Anordnung des Dämpfungselements 22 und die Ausbildung und Anordnung des Bauteils 32 vom Fachmann nach Belieben einstellbar.

Das Bremsmoment des Dämpfungselements 22 ist hier etwas geringer gewählt als das aus der Gewichtskraft der Deckels 16 resultierende Drehmoment, sodass der Deckel 16 auch ohne Unterstützung des Benutzers aufgrund seiner Gewichtskraft sanft ins Schloss fällt und der Gepäckkoffer 10 sicher geschlossen wird.

## Patentansprüche

1. Gepäckkoffer, insbesondere für ein motorisiertes Zweirad, mit einem Deckel (16), der über wenigstens ein Scharnier (18) beweglich relativ zu einem Körper (12) des Gepäckkoffers (10) angeordnet ist, **dadurch gekennzeichnet, dass** im Bereich des Scharniers (18) ein Dämpfungselement (22) vorgesehen ist, das beim Schließen des Deckels (16) in Anlage an ein mit dem Deckel (16) bewegtes Bauteil (32) kommt und so die Schließbewegung dämpft.

2. Gepäckkoffer nach Anspruch 1, **dadurch gekennzeichnet, dass** das Bauteil (32) Bestandteil des Scharniers (18) ist.

3. Gepäckkoffer nach einem der vorhergehenden Ansprüche, **dadurch gekennzeichnet, dass** das Dämpfungselement (22) einen linearen Verschiebeweg durchläuft.

4. Gepäckkoffer nach einem der vorhergehenden Ansprüche, **dadurch gekennzeichnet, dass** das Dämpfungselement (22) in eine ausgefahrene Position vorgespannt ist.

5. Gepäckkoffer nach einem der vorhergehenden Ansprüche, **dadurch gekennzeichnet, dass** das Scharnier (18) ein Bügelscharnier ist, das beim Schließen eine Schwenkbewegung ausführt.

6. Gepäckkoffer nach einem der vorhergehenden Ansprüche, **dadurch gekennzeichnet, dass** das Scharnier (18) in einem letzten Abschnitt der Schließbewegung entlang des Dämpfungselements (22) gleitet.

7. Gepäckkoffer nach einem der vorhergehenden Ansprüche, **dadurch gekennzeichnet, dass** das Bremsmoment des Dämpfungselements (22) geringer ausgelegt ist als ein aus der Gewichtskraft des Deckels (16) resultierendes Drehmoment.

8. Gepäckkoffer nach einem der vorhergehenden Ansprüche, **dadurch gekennzeichnet, dass** das Bauteil (32) mit dem Dämpfungselement (22) bei einem Schließwinkel von 5 bis 45° in Kontakt kommt.

9. Gepäckkoffer nach einem der vorhergehenden Ansprüche, **dadurch gekennzeichnet, dass** nur ein einziges Scharnier (18) und ein einziges Dämpfungselement (22) vorgesehen sind.

10. Gepäckkoffer nach einem der vorhergehenden Ansprüche, **dadurch gekennzeichnet, dass** der Gepäckkoffer (10) ein Topcase ist.

## Claims

1. A luggage case, especially for a motorised two-wheeled vehicle, with a lid (16) which is arranged so as to be movable relative to a body (12) of the luggage case (10) by means of at least one hinge (18),
**characterised in that**
in the region of the hinge (18) there is arranged a damping element (22) which upon closure of the lid (16) comes to lie against a component (32) which is moved with the lid (16) and thus damps the closing movement.

2. A luggage case according to Claim 1, **characterised in that** the component (32) is a component part of the hinge (18).

3. A luggage case according to one of the preceding claims, **characterised in that** the damping element (22) passes through a linear displacement path.

4. A luggage case according to one of the preceding claims, **characterised in that** the damping element (22) is pre-tensioned into an extended position.

5. A luggage case according to one of the preceding claims, **characterised in that** the hinge (18) is a stirrup-type hinge which upon closing performs a pivoting movement.

6. A luggage case according to one of the preceding claims, **characterised in that** the hinge (18) in a last portion of the closing movement slides along the damping element (22).

7. A luggage case according to one of the preceding claims, **characterised in that** the braking moment of the damping element (22) is designed to be smaller than a torque resulting from the weight of the lid (16).

8. A luggage case according to one of the preceding claims, **characterised in that** the component (32) comes into contact with the damping element (22) at a closing angle of 5 to 45°.

9. A luggage case according to one of the preceding claims, **characterised in that** only a single hinge (18) and a single damping element (22) are provided.

10. A luggage case according to one of the preceding claims, **characterised in that** the luggage case (10) is a top case.

## Revendications

1. Coffre à bagages en particulier destiné à un deux roues motorisé comprenant un couvercle (16) qui est monté mobile par rapport au corps (12) du coffre à bagages (10) par l'intermédiaire d'au moins une charnière (18),
**caractérisé en ce que**
dans la zone de la charnière (18) il est prévu un élément d'amortissement (22), qui, lors de la fermeture du couvercle (16), vient en appui sur un élément (32) mobile solidairement au couvercle (16) et amortit ainsi le mouvement de fermeture.

2. Coffre à bagages conforme à la revendication 1,
**caractérisé en ce que**
l'élément (32) est un composant de la charnière (18).

3. Coffre à bagages conforme à l'une des revendications précédentes, **caractérisé en ce que**
l'élément d'amortissement (22) parcourt une course de translation linéaire.

4. Coffre à bagages conforme à l'une des revendications précédentes, **caractérisé en ce que**
l'élément d'amortissement (22) est précontraint dans une position déployée.

5. Coffre à bagages conforme à l'une des revendications précédentes, **caractérisé en ce que**
la charnière (18) est une charnière à articulation de branche qui effectue un mouvement de pivotement lors de la fermeture.

6. Coffre à bagages conforme à l'une des revendications précédentes, **caractérisé en ce que**
la charnière (18) glisse le long de l'élément d'amortissement (22) dans le dernier segment du mouvement de fermeture.

7. Coffre à bagages conforme à l'une des revendications précédentes, **caractérisé en ce que**
le couple de freinage de l'élément d'amortissement (22) est inférieur au couple de rotation résultant du poids du couvercle (16).

8. Coffre à bagages conforme à l'une des revendications précédentes, **caractérisé en ce que**
le composant (32) vient en contact avec l'élément d'amortissement (22) sur un angle de fermeture de 5 à 45°.

9. Coffre à bagages conforme à l'une des revendications précédentes, **caractérisé en ce qu'**
il est prévu une seule charnière (18) et un seul élément d'amortissement (22).

10. Coffre à bagages conforme à l'une des revendications précédentes, **caractérisé en ce qu'**
il est constitué par un top case de moto.
